# EUROPÄISCHE PATENTANMELDUNG

(11) **EP 4 250 201 A1**
(43) Veröffentlichungstag der Anmeldung: **27.09.2023**
(21) Anmeldenummer: 23157437.7
(22) Anmeldetag: 20.02.2023
(51) Int. Cl.: G06Q 10/087, G06Q 10/20, G06Q 50/26

(54) **ERFASSUNG VON AUSRÜSTUNGSGEGENSTÄNDEN EINES EINSATZFAHRZEUGS**

(30) Priorität: 24.03.2022 DE 102022202875
(71) Anmelder: ZF Friedrichshafen AG, 88046 Friedrichshafen (DE)
(72) Erfinder: Traub, Stefan, 88048 Friedrichshafen (DE); Dittrich, Alan, 88045 Friedrichshafen (DE)
(74) Vertreter: ZF Friedrichshafen AG

(57) **Zusammenfassung**

Verfahren zum Erfassen von Ausrüstungsgegenständen (103) für ein Fahrzeug; wobei den Ausrüstungsgegenständen (103) jeweils eine Kennung zugeordnet ist; und wobei die Ausrüstungsgegenstände (103) jeweils mindestens ein Übertragungsmittel (105) aufweisen. Die Kennungen werden von dem jeweiligen Übertragungsmittel (105) zu einem Erfassungsmittel (101) übertragen und von dem Erfassungsmittel (101) erfasst.

## Beschreibung

Die Erfindung betrifft ein Verfahren nach dem Oberbegriff von Anspruch 1, ein Computerprogramm nach Anspruch 12, ein Fahrzeug nach Anspruch 13, ein Gebäude nach Anspruch 15 und einen Ausrüstungsgegenstand nach Anspruch 16.

Ausrüstungsgegenstände im Rettungseinsatz werden von sogenannten Gerätewarten überprüft und vor und nach einem Einsatz gewartet. Diese Wartung und Überprüfung erfolgt anhand von Eintragungen in händisch erstellten Tabellen.

Der Erfindung liegt die Aufgabe zugrunde, die Verwaltung von Ausrüstungsgegenständen im Rettungseinsatz zu verbessern. Diese Aufgabe wird gelöst durch ein Verfahren nach Anspruch 1, ein Computerprogramm nach Anspruch 12, ein Fahrzeug nach Anspruch 13, ein Fahrzeug nach Anspruch 14, ein Gebäude nach Anspruch 15 und einen Ausrüstungsgegenstand nach Anspruch 16. Bevorzugte Weiterbildungen sind in den Unteransprüchen enthalten und ergeben sich aus nachfolgender Beschreibung.

Das erfindungsgemäße Verfahren dient der Erfassung von Ausrüstungsgegenständen für ein Fahrzeug. Bei dem Fahrzeug handelt es sich bevorzugt um ein Einsatzfahrzeug, insbesondere ein Rettungsfahrzeug, das heißt ein im Rettungsdienst eingesetztes Fahrzeug, beispielsweise einen Feuerwehr- oder Krankenwagen.

Ausrüstungsgegenstände sind Gegenstände wie Werkzeuge, Maschinen und/oder Verbrauchsmaterial, die in dem Fahrzeug mitgeführt werden. Insbesondere kann es sich um Gegenstände handeln, die für Tätigkeiten im Rettungseinsatz verwendet werden.

Jedem Ausrüstungsgegenstand ist eine Kennung zugeordnet. Eine Kennung, auch Identifikator genannt, bezeichnet ein Merkmal zur Identifizierung eines Objekts. Das Objekt lässt sich anhand einer mit dem Objekt verknüpften Ausprägung des Merkmals identifizieren. Entsprechend sind verschiedene Objekte und verschiedene Ausprägungen der Kennung einander eineindeutig zugeordnet. Vorliegend dienen die Kennungen der Identifizierung der Ausrüstungsgegenstände. Mit jedem Ausrüstungsgegenstand ist entsprechend eineindeutig eine Ausprägung der Kennung verknüpft.

Die Ausrüstungsgegenstände weisen jeweils mindestens ein Übertragungsmittel auf. Als Übertragungsmittel dient bevorzugt ein Bluetooth-Tag. Dessen ID eignet sich als Kennung des jeweiligen Ausrüstungsgegenstands.

Erfindungsgemäß ist ein Erfassungsmittel zur Erfassung der Kennungen vorgesehen. "Erfassen" bedeutet "empfangen" und darauffolgend "speichern", "weiterverarbeiten" und/oder "weiterleiten".

Die Erfindung sieht vor, dass die Kennungen der Ausrüstungsgegenstände von dem Übertragungsmittel des jeweiligen Ausrüstungsgegenstands zu dem Erfassungsmittel übertragen und von dem Erfassungsmittel erfasst werden. Das Erfassungsmittel empfängt also die Kennungen und speichert sie, verarbeitet sie weiter und/oder leitet sie weiter. Die Übertragung erfolgt vorzugsweise berührungslos, etwa über Funk. Werden als Übertragungsmittel Bluetooth-Tags verwendet, erfolgt die Übertragung der Kennungen bzw. der Bluetooth-IDs entsprechend über eine Bluetooth-Verbindung zwischen dem jeweiligen Übertragungsmittel und dem Erfassungsmittel.

Durch das erfindungsgemäße Verfahren vereinfacht sich die Erfassung der Ausrüstungsgegenstände. Insbesondere ist es möglich, die Ausrüstungsgegenstände automatisiert und somit effizienter und zuverlässiger zu erfassen.

In einer bevorzugten Weiterbildung werden die Kennungen aller in einem Erfassungsbereich des Erfassungsmittels befindlicher Ausrüstungsgegenstände von dem Übertragungsmittel des jeweiligen Ausrüstungsgegenstands zu dem Erfassungsmittel übertragen und von dem Erfassungsmittel erfasst. Der Erfassungsbereich ist ein räumlicher Bereich um das Erfassungsmittel herum, der das Erfassungsmittel beinhaltet. Der Erfassungsbereich zeichnet sich dadurch aus, dass Daten von Objekten, die sich in dem Erfassungsbereich befinden, zu dem Erfassungsmittel übertragen und von dem Erfassungsmittel empfangen werden können. Umgekehrt können Daten von Objekten, die sich außerhalb des Erfassungsbereichs befinden, nicht von dem Erfassungsmittel empfangen werden.

Die Weiterbildung ermöglicht eine räumliche Zuordnung von Ausrüstungsgegenständen zu dem Erfassungsmittel. So befinden sich die Ausrüstungsgegenstände, deren Kennungen zu dem Übertragungsmittel übertragen und von dem Übertragungsmittel erfasst werden, innerhalb des Erfassungsbereichs und damit in räumlicher Nähe zu dem Erfassungsmittel. Dies gilt umso mehr für einen kleinen Erfassungsbereich. Ein kleiner Erfassungsbereich lässt sich daher im Sinne der Weiterbildung in vorteilhafter Weise nutzen.

Bevorzugt ist das Erfassungsmittel in oder an dem Fahrzeug angebracht. Dies bedeutet, dass das Fahrzeug das Erfassungsmittel aufweist. Zwischen dem Fahrzeug und dem Erfassungsmittel besteht dabei eine physische Verbindung. Dadurch ist eine räumliche Zuordnung zu dem Fahrzeug möglich. Insbesondere können die Ausrüstungsgegenstände dem Fahrzeug räumlich zugeordnet werden, wenn die Kennungen aller der in dem Erfassungsbereich des Erfassungsmittels befindlicher Ausrüstungsgegenstände von dem Übertragungsmittel des jeweiligen Ausrüstungsgegenstands zu dem Erfassungsmittel übertragen und von dem Erfassungsmittel erfasst werden.

Durch Ausgestaltung des Erfassungsmittels derart, dass sein Erfassungsbereich räumlich den Abmessungen des Fahrzeugs entspricht, lässt sich ermitteln, welche Ausrüstungsgegenstände sich in dem Fahrzeug befinden. Alle in dem Fahrzeug befindlichen Ausrüstungsgegenstände befinden sich dann zugleich im Erfassungsbereich des Erfassungsmittels und können entsprechend durch Übertragung ihrer Kennung erfasst werden. Dadurch erhalten die Einsatzkräfte vor Ort die Information, welche Ausrüstungsgegenstände in welchem Fahrzeug zu finden sind.

Bevorzugt ist das Verfahren derart weitergebildet, dass erfasst wird, wenn ein Ausrüstungsgegenstand den Erfassungsbereich des Erfassungsmittels verlässt. Es wird also mindestens ein Zeitpunkt erfasst, zu dem ein Ausrüstungsgegenstand den Erfassungsbereich des Erfassungsmittels verlässt. Bevorzugt wird dies von dem Erfassungsmittel erfasst.

Realisieren lässt sich eine solche Weiterbildung etwa, indem das Erfassungsmittel rekursiv, das heißt in wiederholt ausgeführten Schleifen die Kennungen aller in seinem Erfassungsbereich befindliche Ausrüstungsgegenstände empfängt und erfasst. Die jeweils erfassten Kennungen werden mit den bei der jeweils zuvor ausgeführten Rekursion erfassten Kennungen verglichen. Wird dabei festgestellt, dass Kennungen fehlen, so deutet dies darauf hin, dass die entsprechenden Ausrüstungsgegenstände aus dem Fahrzeug entnommen wurden. Werden neue oder zuvor entnommene Ausrüstungsgegenstände in das Fahrzeug geladen, so spiegelt sich dies in entsprechenden Kennungen wider, die in einer bestimmten Rekursionsschleife erstmalig erfasst werden.

In einer entsprechenden bevorzugten Weiterbildung wird erfasst, wenn ein Ausrüstungsgegenstand in den Erfassungsbereich des Erfassungsmittels eintritt. Es wird also mindestens ein Zeitpunkt erfasst, vorzugsweise durch das Erfassungsmittel, zu dem ein Ausrüstungsgegenstand in den Erfassungsbereich des Erfassungsmittels eintritt. Durch permanente Erfassung der den Erfassungsbereich verlassenden und in den Erfassungsbereich eintretenden Ausrüstungsgegenstände lässt sich automatisiert eine Liste der jeweils in dem Erfassungsbereich befindlichen bzw. in dem Fahrzeug vorhandenen Ausrüstungsgegenstände anfertigen und pflegen.

In einer bevorzugten Weiterbildung wird zudem eine Zeitspanne von dem Zeitpunkt, zu dem der jeweilige Ausrüstungsgegenstand den Erfassungsbereich des Erfassungsmittels verlässt, bis zu dem Zeitpunkt, zu dem derselbe Ausrüstungsgegenstand wieder in den Erfassungsbereich des Erfassungsmittels eintritt, ermittelt. Vorzugsweise wird die Zeitspanne von dem Erfassungsmittel ermittelt.

Bevorzugt die jeweils ermittelte Zeitspanne für mindestens einen Ausrüstungsgegenstand aufsummiert. Dies bedeutet im Einzelnen, dass die Zeitspanne, von dem Zeitpunkt, zu dem der mindestens eine Ausrüstungsgegenstand den Erfassungsbereich des Erfassungsmittels verlässt, bis zu dem Zeitpunkt, zu dem derselbe Ausrüstungsgegenstand wieder in den Erfassungsbereich des Erfassungsmittels eintritt, rekursiv ermittelt wird. Die in den einzelnen Rekursionsschleifen jeweils ermittelten Zeitspannen werden aufsummiert.

Die erhaltene Summe der Zeitspannen ist ein Maß für die Zeit, in welcher der mindestens eine Ausrüstungsgegenstand in Betrieb war. Wird eine bestimmte Betriebszeit überschritten, so ist, wie gegebenenfalls unter Berücksichtigung weiterer Bedingungen, eine Wartung fällig. Die Weiterbildung erlaubt somit eine automatisierte Erstellung von Wartungsplänen.

Noch detaillierter lässt sich die Wartung planen, wenn Umwelteinflüsse berücksichtigt werden, die auf den jeweiligen Ausrüstungsgegenstand einwirken. In einer bevorzugten Weiterbildung werden diese Umwelteinflüsse gemessen. Dazu weist mindestens ein Ausrüstungsgegenstand mindestens ein Messmittel zum Messen ein oder mehrerer physikalischer Werte eines oder mehrerer Umweltparameter, das heißt eines oder mehrere auf den Ausrüstungsgegenstand einwirkender physikalischer Größen, beispielsweise Umgebungstemperatur, Luftfeuchtigkeit und/oder Erschütterungen, auf. Die Werte werden, vorzugsweise berührungslos, von dem Übertragungsmittel zu dem Erfassungsmittel übertragen und von dem Erfassungsmittel erfasst.

Bevorzugt weist der Ausrüstungsgegenstand mindestens ein Speichermittel auf. Das Verfahren ist bevorzugt derart weitergebildet, dass die mit dem Messmittel gemessenen Werte auf dem Speichermittel gespeichert werden, wenn sich der Ausrüstungsgegenstand außerhalb des Erfassungsbereichs des Erfassungsmittels befindet, etwa bei einem Einsatz. Wird der Ausrüstungsgegenstand nach Beendigung des Einsatzes in dem Fahrzeug deponiert, tritt er in den Erfassungsbereich des Erfassungsmittels ein. Die Weiterbildung sieht vor, dass die gespeicherten Werte dann mittels des Übertragungsmittels zu dem Erfassungsmittel übertragen werden. Dies ermöglicht eine Übertragung der gemessenen Werte auch dann, wenn sich der Ausrüstungsgegenstand im Einsatz außerhalb des Erfassungsbereichs des Erfassungsmittels befindet.

Die Zeitspanne und/oder die gemessenen und zu dem Erfassungsmittel übertragenen Werte werden in einer bevorzugten Weiterbildung zusammen mit der Kennung des jeweiligen Ausrüstungsgegenstands gespeichert. Verlässt also ein Ausrüstungsgegenstand den Erfassungsbereich des Erfassungsmittels, so wird die Zeit bis zum Wiedereintritt desselben Ausrüstungsgegenstands in den Erfassungsbereich und/oder die gemessenen Werte der währenddessen gemessenen auf den Ausrüstungsgegenstand einwirkenden physikalischen Größen zusammen mit der Kennung des Ausrüstungsgegenstands gespeichert. Die so gespeicherten Daten entsprechen den bisher händisch erstellten Wartungstabellen. Das weiterbildungsgemäße Verfahren ermöglicht also die automatisierte Erstellung einer Wartungstabelle.

Die Kennungen, Zeitpunkte, Zeitspannen und/oder Werte physikalischer Größen werden bevorzugt von dem Erfassungsmittel zu einem Zentralrechner übertragen, auf dem ein zentrales Wartungsmanagement-System implementiert ist. In dem zentralen Wartungsmanagement-System können Tätigkeiten zur Wartung und Instandsetzung der Ausrüstungsgegenstände automatisch oder automatisiert geplant werden. Insbesondere ist es möglich, automatisch oder automatisiert Verschleißteile nachzubestellen und Arbeitsaufträge mit Terminen und dem Lagerort des jeweiligen Ausrüstungsgegenstands in einem Fahrzeug verbucht werden.

In einer bevorzugten Weiterbildung wird das Fahrzeug geortet. Aufgrund der oben beschriebenen räumlichen Zuordnung der erfassten Ausrüstungsgegenstände zu dem Fahrzeug wird eine entsprechende Ortung bzw. der über die Ortung bestimmte Ort des Fahrzeugs, den erfassten Ausrüstungsgegenständen zugeordnet. Dadurch erhalten Einsatzkräfte vor Ort die Information, an welchem Ort welche Ausrüstungsgegenstände zu finden sind.

Vorteilhaft kann es alternativ sein, das Erfassungsmittel ortsfest anzuordnen. So lässt sich das Erfassungsmittel beispielsweise gebäudefest, das heißt an oder in einem Gebäude, etwa dem Gebäude einer Feuerwehr- oder Rettungswache, anbringen. Insbesondere kann das Erfassungsmittel an einem Hallentor angebracht werden.

In einer bevorzugten Weiterbildung werden die Ausrüstungsgegenstände erfasst, wenn das Fahrzeug sich mindestens teilweise, vorzugsweise vollständig im Erfassungsbereich des Erfassungsmittels befindet. Insbesondere können die Ausrüstungsgegenstände erfasst werden, wenn das Rettungsfahrzeug durch das Hallentor fährt und dabei ein an dem Hallentor angebrachtes Erfassungsmittel passiert. Eine derartige Weiterbildung ist vorteilhaft, da nur ein einziges Erfassungsmittel erforderlich ist. Dadurch lassen sich die Installationskosten geringhalten.

Ein erfindungsgemäßes Computerprogramm implementiert das erfindungsgemäße Verfahren oder eine bevorzugte Weiterbildung des Verfahrens. Das Computerprogramm umfasst also Anweisungen zur Ausführung des erfindungsgemäßen Verfahrens oder einer bevorzugten Weiterbildung und ist damit zur Ausführung des erfindungsgemäßen Verfahrens oder einer bevorzugten Weiterbildung ausgebildet. Dies bedeutet, dass das Computerprogramm einen Computer zur Ausführung des erfindungsgemäßen Verfahrens oder einer bevorzugten Weiterbildung veranlasst, wenn das Computerprogramm von dem Computer ausgeführt wird. Das Computerprogramm kann auf einem Speichermedium gespeichert oder in einem oder mehreren übertragungsfähigen Signalen codiert sein. Insbesondere kann das Computerprogramm als ein Computerprogrammprodukt vorliegen, das heißt als eine handelbare Einheit bzw. eine Einheit, die dem Zweck dient, den Besitz an dem Computerprogramm zu übertragen.

Das erfindungsgemäße Computerprogramm kann in einem Computer enthalten sein. Ein solcher Computer ist ausgebildet bzw. eingerichtet, das erfindungsgemäße Verfahren oder eine bevorzugte Weiterbildung auszuführen. Bei dem Computer kann es sich insbesondere um das oben beschriebene Erfassungsmittel und/oder den Zentralrechner handeln.

Ein erfindungsgemäßes Fahrzeug zeichnet aus sich durch mindestens ein Erfassungsmittel, das zur Ausführung einer der oben beschriebenen Weiterbildungen, die sich auf ein an dem Fahrzeug angebrachtes Erfassungsmittel beziehen, ausgebildet ist.

Das Fahrzeug ist bevorzugt mit mindestens einem Übertragungsmittel zum Übertragen der erfassten Kennungen, des erfassten Zeitpunkts, der ermittelten Zeitspanne und/oder der erfassten Werte weitergebildet. Die Übertragung kann etwa zu einem mobilen Endgerät eines Einsatzleiters oder zu einem Zentralrechner einer Leitstelle erfolgen.

Das oben beschriebene, mindestens ein Erfassungsmittel aufweisende Gebäude ist erfindungsgemäß.

Erfindungsgemäß ist weiterhin jeder der oben beschriebenen Ausrüstungsgegenstände, denen jeweils eine Kennung zugeordnet ist, und die jeweils mindestens ein Übertragungsmittel aufweisen.

Gemäß einer bevorzugten Weiterbildung weist ein Ausrüstungsgegenstand darüber hinaus mindestens ein oben beschriebenes Messmittel auf.

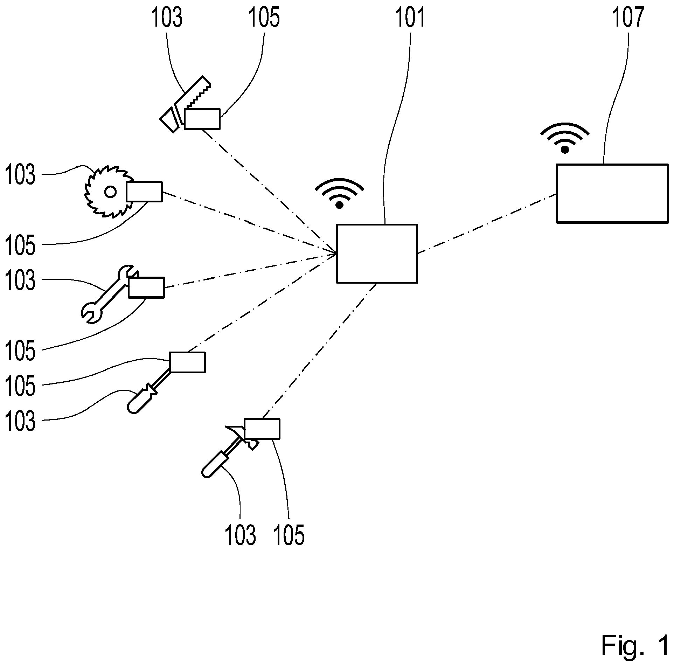

Das bevorzugte Ausführungsbeispiel der Erfindung ist in Figur 1 dargestellt. Im Einzelnen zeigt:
Figur 1 ein Bluetooth-basiertes System zur Erfassung von Ausrüstungsgegenständen eines Einsatzfahrzeugs.

Das Einsatzfahrzeug weist gemäß Figur 1 eine ECU 101 auf. In dem Fahrzeug befinden sich verschiedene Ausrüstungsgegenstände 103. Jeder Ausrüstungsgegenstand 103 ist mit einem Bluetooth-Tag 105 versehen. Über das Bluetooth-Tag 105 lässt sich der jeweilige Ausrüstungsgegenstand 103 identifizieren.

Die ECU 101 ist in der Lage, die in ihrem Erfassungsbereich befindlichen Bluetooth-Tags 105 auszulesen. Durch iteratives Auslesen ermittelt die ECU 101, welche Bluetooth-Tags 105 und damit welche Ausrüstungsgegenstände 103 sich in ihrem Erfassungsbereich befinden. Da die ECU 101 in dem Einsatzfahrzeug verbaut ist, korreliert dies mit den in dem Einsatzfahrzeug befindlichen Ausrüstungsgegenständen 103.

Wird ein Ausrüstungsgegenstand 103 aus dem Einsatzfahrzeug entnommen, verlässt dessen Bluetooth-Tag 105 den Erfassungsbereich der ECU. Daraus kann die ECU 101 auf eine erfolgte Entnahme des Ausrüstungsgegenstands 103 schließen. Tritt der entsprechende Bluetooth-Tag 105 wieder in den Erfassungsbereich der ECU 101 ein, so bedeutet dies, dass der entsprechende Ausrüstungsgegenstand 103 zurück in das Einsatzfahrzeug geräumt wurde. Auf die Weise ist die ECU 103 in der Lage, eine jederzeit aktuelle Liste der in dem Einsatzfahrzeug befindlichen Ausrüstungsgegenstände 103 zu pflegen.

Über eine entsprechende Datenverbindung überträgt die ECU 101 die genannte Liste 103 zu einem Zentralrechner 107. Auch ist es möglich, die Liste zu einem mobilen Endgerät eines Einsatzleiters zu übertragen.

### Bezugszeichen

- 101: ECU
- 103: Ausrüstungsgegenstand
- 105: Bluetooth-Tag
- 107: Zentralrechner

## Patentansprüche

1. Verfahren zum Erfassen von Ausrüstungsgegenständen (103) für ein Fahrzeug; wobei
den Ausrüstungsgegenständen (103) jeweils eine Kennung zugeordnet ist; und wobei
die Ausrüstungsgegenstände (103) jeweils mindestens ein Übertragungsmittel (105) aufweisen; **dadurch gekennzeichnet, dass**,
die Kennungen von dem jeweiligen Übertragungsmittel (105) zu einem Erfassungsmittel (101) übertragen und von dem Erfassungsmittel (101) erfasst werden.

2. Verfahren nach dem vorhergehenden Anspruch; **dadurch gekennzeichnet, dass** die Kennungen aller in einem Erfassungsbereich des Erfassungsmittels (101) befindlicher Ausrüstungsgegenstände (103) von dem Übertragungsmittel (105) des jeweiligen Ausrüstungsgegenstands (103) zu dem Erfassungsmittel (101) übertragen und von dem Erfassungsmittel (101) erfasst werden.

3. Verfahren nach einem der vorhergehenden Ansprüche; **dadurch gekennzeichnet, dass**
mindestens ein Erfassungsmittel (101) in oder an dem Fahrzeug angebracht ist.

4. Verfahren nach dem vorhergehenden Anspruch; **dadurch gekennzeichnet, dass** mindestens ein Zeitpunkt, zu dem ein Ausrüstungsgegenstand (103) den Erfassungsbereich des Erfassungsmittels (101) verlässt, erfasst wird.

5. Verfahren nach einem der Ansprüche 3 oder 4; **dadurch gekennzeichnet, dass** mindestens ein Zeitpunkt, zu dem ein Ausrüstungsgegenstand (103) in den Erfassungsbereich des Erfassungsmittels (101) eintritt, erfasst wird.

6. Verfahren nach Anspruch 5 unter Rückbezug auf Anspruch 4; **dadurch gekennzeichnet, dass**
eine Zeitspanne von dem Zeitpunkt, zu dem der Ausrüstungsgegenstand (103) den Erfassungsbereich des Erfassungsmittels (101) verlässt, bis zu einem Zeitpunkt, zu dem derselbe Ausrüstungsgegenstand (103) wieder in den Erfassungsbereich des Erfassungsmittels eintritt (101), ermittelt wird.

7. Verfahren nach einem der vorhergehenden Ansprüche; **dadurch gekennzeichnet, dass**
mindestens ein Ausrüstungsgegenstand (103) mindestens ein Messmittel zum Messen ein oder mehrere Werte einer oder mehrere auf den Ausrüstungsgegenstand (103) einwirkender physikalischer Größen aufweist; wobei
die Werte von dem Übertragungsmittel (105) zu dem Erfassungsmittel (101) übertragen und von dem Erfassungsmittel (101) erfasst werden.

8. Verfahren nach dem vorhergehenden Anspruch; **dadurch gekennzeichnet, dass** der Ausrüstungsgegenstand (103) mindestens ein Speichermittel aufweist; wobei die Werte auf dem Speichermittel gespeichert werden, wenn der Ausrüstungsgegenstand (103) sich außerhalb des Erfassungsbereichs des Erfassungsmittels (101) befindet; wobei
die gespeicherten Werte mittels des Übertragungsmittels (105) zu dem Erfassungsmittel (101) übertragen werden, wenn der Ausrüstungsgegenstand (103) sich innerhalb des Erfassungsbereichs befindet.

9. Verfahren nach einem der Ansprüche 6 bis 8; **dadurch gekennzeichnet, dass** die Kennung des Ausrüstungsgegenstands (103) mit der Zeitspanne und/oder den übertragenen Werten gespeichert wird.

10. Verfahren nach einem der Ansprüche 3 bis 9; **dadurch gekennzeichnet, dass** das Fahrzeug geortet wird und eine entsprechende Ortung den erfassten Ausrüstungsgegenständen (103) zugeordnet wird.

11. Verfahren nach einem der Ansprüche 1 oder 2; **dadurch gekennzeichnet, dass** das Erfassungsmittel (101) ortsfest angebracht ist; wobei
die Ausrüstungsgegenstände (103) erfasst werden, wenn das Fahrzeug sich mindestens teilweise im Erfassungsbereich des Erfassungsmittels (101) befindet.

12. Computerprogramm zur Ausführung eines Verfahrens nach einem der vorhergehenden Ansprüche.

13. Fahrzeug mit mindestens einem Erfassungsmittel (101) zur Ausführung eines Verfahrens nach einem der Ansprüche 3 bis 11.

14. Fahrzeug nach dem vorhergehenden Anspruch; **gekennzeichnet durch** mindestens ein Übertragungsmittel zum Übertragen der erfassten Kennungen, des mindestens einen erfassten Zeitpunkts, der ermittelten Zeitspanne und/der der erfassten Werte.

15. Gebäude mit mindestens einem Erfassungsmittel (101) zur Ausführung eines Verfahrens nach Anspruch 11.

16. Ausrüstungsgegenstand (103) für ein Fahrzeug, mit mindestens einem Übertragungsmittel (105) zur Verwendung in einem Verfahrens nach einem der vorhergehenden Verfahrensansprüche.

17. Ausrüstungsgegenstand nach dem vorhergehenden Anspruch, mit mindestens einem Messmittel zur Verwendung in einem Verfahren nach einem der Ansprüche 7 bis 10.
